# EUROPEAN PATENT APPLICATION

(11) **EP 2 085 717 A2**
(43) Date of publication of application: **05.08.2009**
(21) Application number: 09000949.9
(22) Date of filing: 23.01.2009
(51) Int. Cl.: F24J 2/54

(54) **Angular orientation device for solar panels**

(30) Priority: 24.01.2008 IT VA20080006
(71) Applicant: Fantinelli S.r.L., 21058 Solbiate Olona (VA) (IT)
(72) Inventor: Fantinelli, Davide, 21013 Gallarate (Varese) (IT)
(74) Representative: Lunati, Valerio

(57) **Abstract**

There is provided an angular orientation device (1) for solar panels (2) and the like comprising at least one support structure (3) for the solar panel (2) suitable for supporting the same and for allowing the variation of the angular position thereof, at least two fluid dynamic cylinders (4) connected to the solar panel (2) and to the support structure (3) and suitable for varying the angular position of the solar panel (2), at least two tanks (5) selectively in fluid communication with the fluid dynamic cylinders (4) and comprising thermally expansible fluid, the tanks (5) being exposed to the sun in different directions for varying the fluid pressure according to the sun direction.

## Description

The present invention relates to an angular orientation device for solar panels and the like of the type described in the preamble of the first claim.

Solar panels such as, in particular, photovoltaic panels and the like, are currently known.

As known, solar panels are secured to special structures suitable for allowing the support of the same panels and other important functions, such as the transfer of thermal or electric energy.

Sometimes, support structures and solar panels comprise an angular orientation device suitable for allowing the panel to always be facing in the direction of the sun and to always have maximum efficiency. This happens in particular in energy production systems arranged in special open spaces and secured to the ground.

Several types of angular orientation devices are also known.

In particular, a first type comprises a GPS suitable for calculating the precise position of the sun and of the earth so as to orientate the panel according to suitable angles.

A further type of angular orientation device, on the other hand, provides for the presence, in the proximity and at the opposite ends of the same panel, of some solar energy sensors suitable for verifying the different incidence of sun rays in different places and calculating and accordingly controlling the suitable position of the same panel.

The orientation devices mentioned above have some important drawbacks.

In fact, they need a special actuator for carrying out the orientation.

Said actuator is actuated by electric energy and such electric energy reduces the efficiency of the system comprising the solar panels. In fact, it is an energy cost that must be deducted from the energy profits obtained by the use of these panels.

A particular type of passive orientation device has been constructed for overcoming said drawback, which at the opposite sides of the solar panel uses counterweights in reciprocal communication comprised of containers including a volatile fluid. Solar energy allows fluid passage by evaporation from one container to the other and the consequent panel rotation due to the different weight forces that act on the opposite sides.

Such device substantially eliminates the problem of energy waste, but has other drawbacks mentioned hereinafter, such as in particular non-optimal accuracy and high cost.

Further drawbacks of known angular orientation devices in fact are the high cost thereof, the necessary continuous maintenance thereof, and the fact that said devices do not always have a satisfactory accuracy.

Last but not least, another drawback consists in that known orientation devices generally have a single degree of rotational freedom.

In fact, the panel is substantially moved along a single inclined rotation axis that follows the East-Westwards path of the sun during the day, whereas the panel inclination with respect to the vertical, is substantially defined by the latitude of the place in which said solar panel is located.

However, it has been calculated that it is preferable for the same panel to modify its inclination during the day, with respect to the vertical axis as well, for adjusting as the sun height relative to the horizon varies.

However, the energy and money waste required for obtaining a further degree of freedom of the orientation device often exceeds the advantages. A compromise solution is therefore chosen, only suitable for the hours of stronger radiation.

In this situation, the technical aim of the present invention is to devise an angular orientation device for solar panels capable of substantially overcoming the aforementioned drawbacks.

Within the scope of said technical aim, an important object of the invention is to provide an angular orientation device that allows reduced energy consumption.

Another important object of the invention is to obtain an angular orientation device that is accurate and precisely adjustable according to suitable settings and in particular related to both the latitude of the panel position, and to the different height of the sun with respect to the horizon, during daytime.

A further object of the invention is to provide an inexpensive and simple orientation device that does not require continuous maintenance.

The technical aim and the objects specified are achieved by an angular orientation device for solar panels characterised in that it comprises one or more of the new technical solutions described and claimed below.

Preferred embodiments of the invention are illustrated by way of an example in the accompanying drawings. In particular:
**Fig. 1** shows a schematic side view of the device according to the invention.
**Fig. 2** shows a schematic view of sect. II-II of Fig. 2; and
**Fig. 3** shows a detail of the device according to the invention.

With reference to the Figures, the device according to the invention is indicated as a whole by the number **1.**

It is suitable for varying the angular position of at least one solar panel 2 so that this is always suitably oriented in the direction of the sun.

The angular orientation device 1 along with at least one solar panel 2 defines a solar energy conversion apparatus **12.**

By the term solar panel 2 it is meant, in particular, photovoltaic panels or as an alternative, thermal solar panels or other types of panels still suitable for converting solar energy in other types of easily usable energy.

More in particular, device 1 comprises a support structure **3** suitable for supporting the solar panel 2 and for allowing the variation of the angular position thereof.

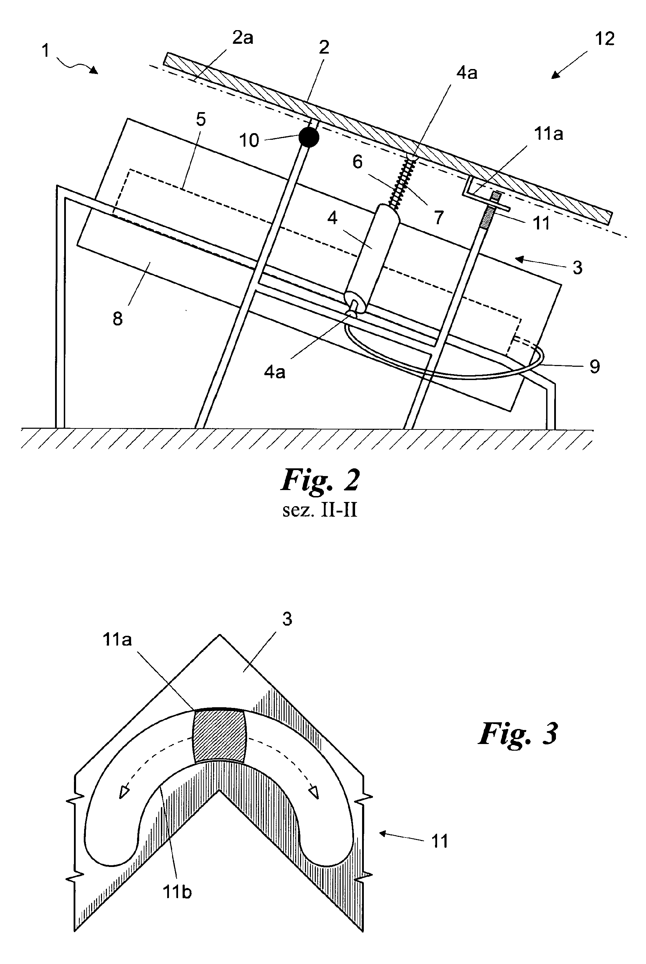

The support structure 3 is connected to the solar panel 2 by means of a spherical hinge **10** and a cam **11,** illustrated in detail in Fig. 3, suitable for defining a trajectory for varying the angular position of the solar panel 2 and preferably shaped substantially as an arc.

By the term spherical hinge 10 it is meant a hinge that can substantially rotate along all the direction defined by cam 11.

Cam 11 defines a seat **11b** integral to the support structure 3 in which a pin **11a** is suitably inserted, integral to solar panel 2.

Device 1 further comprises at least two fluid dynamic cylinders **4** connected to the solar panel 2 and to the support structure 3 and suitable for supporting the same and for varying the angular position of the solar panel 2.

In particular, each fluid dynamic cylinder 4 comprises a piston **7** connected to the solar panel 2 and suitable for moving the same.

Moreover, fluid dynamic cylinders 4 are suitably connected to panel 2 and to structure 3 by means of special hinges **4a,** suitable for allowing the positioning freedom of the same.

Device 1 further comprises at least and preferably two tanks **5** in fluid communication with the fluid dynamic cylinders 4, comprising a thermally expansible fluid and exposed to the sun in different directions. Moreover, they are preferably arranged at the sides of panel 2.

The fluid is preferably composed of a gas and more preferably, substantially of nitrogen and is suitable for moving the fluid dynamic cylinders 4 and in particular pistons 7, when the temperature thereof is changed.

In fact, fluid 7 exerts a pressure substantially directly proportional to its own temperature.

Moreover, tanks 5 are preferably sized so that inner volume variations, due to the movement of piston 7, are substantially negligible, since below 5% of the total volume.

Moreover, tanks 5 are suitably arranged separate from the fluid dynamic cylinders 4 and connected to the same by means of special piping **9.** As an alternative, tanks 5 can also be arranged combined with the fluid dynamic cylinders 4.

Moreover, each tank 5 preferably comprises a parabola-like element **8** arranged in the proximity of the same and suitable for conveying the sun rays that reach the same element 8 onto tank 5.

The parabola-like elements 8 are therefore oriented in a mutually different way, according to the same direction of tank 5 contiguous to the same element, so as to gather the radiation from some directions and exclude it from the other directions.

They are provided with a reflecting face facing tank 5 and suitable for directing the sun rays towards the same tank 5, and with an insulating face suitable for thermally insulating tank 5 from the sun rays when the sun is positioned in such a way as to not directly radiate the reflecting face of the same elements 8.

Finally, each tank 5 may be connected to a plurality of fluid dynamic cylinders 4 arranged on different support structures 3 and panels 2.

Device 1 further comprises at least one spring element 6 suitable for adjusting and stabilising the angular position of the solar panel 2 and for ensuring a smoothness of movement of the same solar panel 2.

In particular, the spring elements 6 may be provided on the fluid dynamic cylinders 4 and directly act on pistons 7. In this case, the same are suitably comprised of helical compression springs. As an alternative, a spring element 6 may be provided, arranged at the spherical hinge 10.

The operation of the angular orientation device 1 and of the relative solar energy conversion apparatus 12 described above in the structural aspect thereof is as follows.

The solar panel 2 is assembled on support 3 and is connected to the fluid dynamic cylinders 4 in turn connected to tanks 5.

As already specified, multiple supports 3 may be provided, each suitably supporting a solar panel 2 and all connected to the special tanks 5. Moreover, a smaller number of tanks 5 than supports 3 may be provided, in particular only two tanks 5 may be arranged for a plurality of supports 3.

Tanks 5 are arranged in such a way that one is exposed to the sun in particular during the morning, and the other is exposed to the sun in particular during the night.

The two tanks 5 therefore are conveniently arranged one eastward and the other westward.

The fluid dynamic cylinders 4 are also suitably provided in a number of two and substantially arranged on the East and West halves of panel 2.

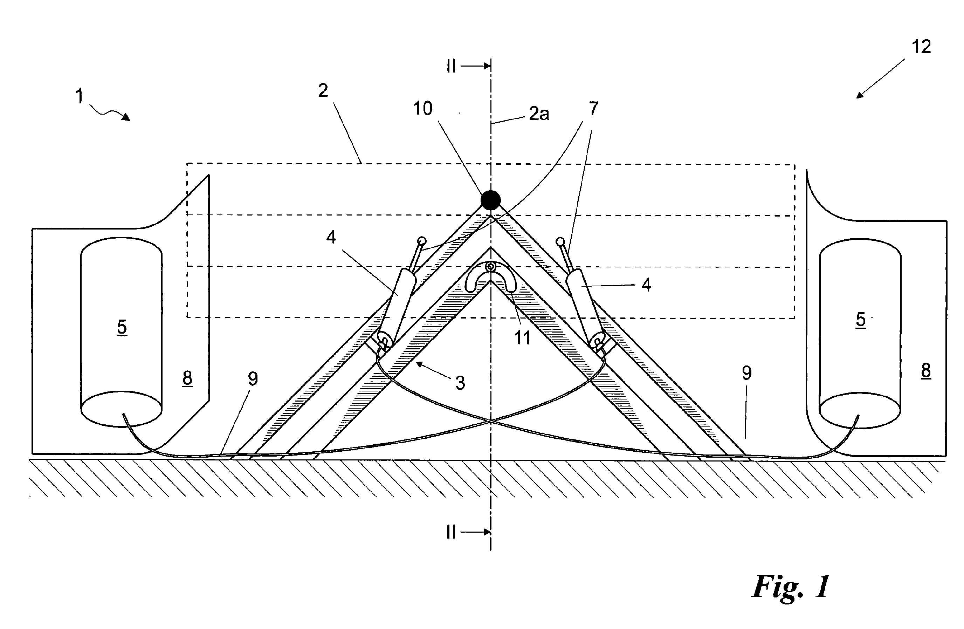

The fluid dynamic cylinders 4 therefore are preferably connected by means of piping 9 to tank 5 arranged at the opposite end, as illustrated in Fig. 1, that is, the fluid dynamic cylinder 4 arranged on the East half is connected to tank 5 arranged facing westwards and vice versa.

Tanks 5 therefore move the solar panel 2 according to the temperature of the fluid contained therein.

In particular, tank 5 exposed eastwards shall be heated more by the sun rays in the morning. The fluid contained in such tank shall therefore increase in pressure expanding piston 7 of the fluid dynamic cylinder 4 arranged on the west half of panel 2. Panel 2 shall thus change its position rotating about the spherical hinge 10 and cam 11 and shall make a rotation basically about an axis **2a** substantially arranged from North southwards and passing by said spherical hinge 10.

At noon and at night the two tanks 5 shall substantially have the same temperature, the two pistons 7 shall therefore exert the same force on the two halves of panel 2 and shall consequently keep it horizontal along the east-west axis. Such positioning is favoured by the presence of the spring elements 6, which tend to counterbalance each other.

Substantially, the differential pressure between the two fluid dynamic cylinders 7 varies according to the sun position and arranges panel 2, or panels 2, according to an optimum angle. The same differential pressure therefore acts both as a sensor of the sun position and as an actuator of the panel movement.

In the evening, on the contrary, a rotation opposite that of the morning takes place.

Overall, the mean pressure difference between night and day exerted by the fluid is less than 10 bar and preferably close to 0.8 bar.

On the other hand, along the North-South axis panel 2 usually has an inclination substantially determined by the latitude of the place in which the same is located, as illustrated in Fig. 2. As mentioned above, however, it is suitable for the same panel 2 to change its inclination by angles preferably smaller than 30°, for varying such inclination between morning, noon and evening, in synchrony with the different height of the sun with respect to the horizon.

Such inclinations are given by the presence of cam 11 which allows varying the position of axis 2a and thus the inclination of panel 2 according to suitably calculated angles and also variable according to the latitude.

The invention achieves important advantages.

In fact, device 1 does not consume electric or other type of energy and is directly moved by the solar energy and tanks 5 are both sensors and actuators.

Device 1 further allows obtaining rotations by desired angles around both East-West and North-South axes without having a complex and expensive structure, thanks to the introduction of cam 11.

The rotation of panel 2 supported by device 1 may further be easily adjusted by means of the spring element 6, which allows a fluid and continuous rotation of the same panel 2.

The rotation smoothness of panel 2 is further improved by the presence of nitrogen as thermally expansible fluid. In fact, it has a thermal expansion that varies in a good approximation linearly with temperature and moreover it does not freeze in winter months or in cold countries.

Finally, device 11 is very simple and works automatically without needing to be continuously adjusted. Therefore, it is inexpensive as regards manufacture and maintenance costs.

The invention is susceptible to modifications and variants falling within the inventive concept

All the details can be replaced by equivalent elements and the materials, the shapes and dimensions can be any.

## Claims

1. Angular orientation device (1) for solar panels (2) and the like comprising at least one support structure (3) for said solar panel (2) suitable for supporting said solar panel (2) and for allowing the variation of the angular position of said solar panel (2), at least two fluid dynamic cylinders (4) connected to said solar panel (2) and to said support structure (3) and suitable for varying said angular position of said solar panel (2), and **characterised in that** it comprises: at least two tanks (5) selectively in fluid communication with said fluid dynamic cylinders (4) comprising thermally expansible fluid, said tanks (5) being exposed to the sun in different directions for varying the pressure of said fluid according to the sun direction.

2. Device according to Claim 1, comprising at least one spring element (6) suitable for stabilising said angular position of said solar panel (2).

3. Device according to Claim 2, wherein each of said fluid dynamic cylinders comprises a piston (7), and wherein said spring elements (6) directly act on said piston (7).

4. Device according to one or more of the previous Claims, wherein said thermally expansible fluid is substantially Nitrogen.

5. Device according to one or more of the previous Claims, wherein said solar panels (2) are substantially moved by means of the differential pressure between said fluid dynamic cylinders (4).

6. Device according to one or more of the previous Claims, comprising at least one parabola-like element (8) arranged in the proximity of each of said tanks (5) and in the exposure direction of said tank, suitable for conveying the sun rays on said tanks (5).

7. Device according to one or more of the previous Claims, wherein said tanks (6) are arranged separate from said fluid dynamic cylinders (4) and are selectively connected to the same by means of piping (9).

8. Device according to one or more of the previous Claims, wherein said support structure (3) is connected to said solar panel (2) by means of a spherical hinge (10) and a cam (11) suitable for defining a trajectory for said variation of the angular position of said solar panel (2).

9. Device according to one or more of the previous Claims, comprising a plurality of said support structures (3) connected to a same fluid dynamic cylinder (4).

10. Device according to one or more of the previous Claims, wherein the inner volume variations of said tanks (5), due to the movement of said piston (7), are less than 5% of the volume of said tank (5).

11. Solar energy conversion apparatus (12) comprising said angular orientation device (1) according to one or more of the previous Claims and including only one of said support structure (3) and at least one solar panel (2) secured to said structure (3).
